# EUROPEAN PATENT APPLICATION

(11) **EP 4 468 247 A1**
(43) Date of publication of application: **27.11.2024**
(21) Application number: 23744350.2
(22) Date of filing: 18.05.2023
(51) Int. Cl.: G06T 13/20, H04N 21/2343, G06N 3/08, H04N 21/4402, H04N 21/81

(54) **RENDERING ACCELERATION METHOD AND SYSTEM FOR THREE-DIMENSIONAL ANIMATION**

(30) Priority: 12.04.2023 CN 202310382387
(71) Applicant: Guo, Jiaqi, Shenzhen, Guangdong 518000 (CN)
(72) Inventor: Guo, Jiaqi, Shenzhen, Guangdong 518000 (CN)
(74) Representative: Cleanthous, Marinos
(86) International application number: PCT/CN2023/095119
(87) International publication number: WO 2024/212310

(57) **Abstract**

The invention provides a three-dimensional animation rendering acceleration method and system, and relates to the technical field of animation rendering. The method obtains low resolution or/and low frame rate 3D animation by reducing the resolution or/and frame rate of the 3D animation to be rendered, and starts the corresponding AI function in the renderer with built-in AI super-resolution and frame supplement functions, starts rendering of low-resolution or/and low frame rate 3D animation and performs AI-accelerated rendering to obtain a sequence of 3D animation pictures after accelerated rendering, and then completes other post-production. The rendering time of conventional 3D animation can be reduced to the greatest extent, and it solves the problem that a lot of energy, cost and time are wasted due to repeated rendering caused by modification in the existing conventional 3D animation production process.

## Description

### TECHNICAL FIELD

The invention relates to the technical field of animation rendering, in particular to a method and system for accelerating 3D animation rendering.

### BACKGROUND

With the rapid development of the economy, the demand for 3D animation and the audience's requirements for the fluency of animation are also getting higher and higher. However, modifications are unavoidable in the entire 3D animation production process, and each modification requires re-rendering, which consumes a lot of time and money in the process of repeated rendering. Therefore, in order to meet the fluency requirements of the audience, it is necessary to accelerate the rendering of the animation.

In the current 3D animation rendering process, methods to speed up rendering include: 1. replacing the 3D renderer 2. improving computer configuration 3. optimizing rendering settings 4. cooperating with third-party rendering farms 5. replacing 3D software, etc. However, the existing accelerated rendering methods require more investment, more time and energy to optimize the rendering settings according to the needs of the lens and the scene, and more learning time costs.

### CONTENTS OF THE INVENTION

The purpose of the invention is to provide a 3D animation rendering acceleration method and system, which obtains low resolution or/and low frame rate 3D animation by reducing the resolution or/and frame rate of the 3D animation to be rendered; starts the corresponding AI function in the renderer with built-in AI super-resolution and frame supplement functions, and performs AI super-resolution and AI frame complement to accelerate the rendering of low-resolution or/and low frame rate 3D animation rendered images, obtains the 3D animation sequence after accelerated rendering and completes other post-production, which can minimize the rendering time of conventional 3D animation and solve the problem that a large amount of effort, expense and time are wasted in repeated rendering caused by modification in the existing conventional 3D animation production process.

Embodiments of the invention are achieved like this:

In the first aspect, the embodiment of the application provides a method for accelerating rendering of 3D animation, including the following steps: obtain the 3D animation to be rendered; reduce the resolution or/and frame rate of the 3D animation to be rendered to obtain a low resolution or/and low frame rate 3D animation; start the corresponding AI function in the renderer with built-in AI super resolution and frame supplement function, start rendering for low-resolution or/and low frame rate 3D animation and perform AI-accelerated rendering, and obtain the 3D animation picture sequence after accelerated rendering.

In some embodiments of the invention, the specific steps of reducing the resolution and frame rate of the 3D animation to be rendered include: in the dynamic animation rendering settings, reduce the resolution of the exported sequence frame to obtain a low-resolution 3D animation; in the dynamic animation rendering settings, reduce the frame rate of the exported sequence frames to obtain low frame rate 3D animation.

In some embodiments of the invention, the steps of starting the corresponding AI function in the renderer with built-in AI super-resolution and frame supplement functions, starting rendering of low-resolution or/and low frame rate 3D animation and performing AI-accelerated rendering specifically include: in the AI super-resolution tool, set the resolution of the super-resolution target, and get the AI super-resolution sequence frame after running; the AI super-resolution tool is pre-based on deep learning technology, obtained through feature extraction, feature dimension transformation, nonlinear link, mapping, deconvolution and amplification, and neural network processing; import AI super-resolution sequence frames to AI frame supplement tool; in the AI frame supplement tool, set the target frame rate after the frame supplement. After the setting is completed, the AI frame supplement tool calculates the intermediate frame rate based on the artificial intelligence algorithm and the front and rear frames and carry out supplementary frame according to the intermediate frame rate until the supplementary frame is completed; import the sequence frames after supplementary frames into the post-production software to continue the post-production of 3D animation.

In some embodiments of the invention, it is also included that the intermediate frame rate can be infinitely divided, so as to realize any custom frame number.

In the second aspect, the embodiment of the application provides a 3D animation rendering acceleration system, which includes: acquisition module, used to acquire the 3D animation to be rendered; resolution reduction and frame reduction module, used to reduce the resolution or/and frame rate of the 3D animation to be rendered to obtain a low resolution or/and low frame rate 3D animation;

Accelerated rendering module: used to start the corresponding AI function in the renderer with built-in AI super resolution and frame supplement function, start rendering for low-resolution or/and low frame rate 3D animation and perform AI-accelerated rendering, and obtain the 3D animation picture sequence after accelerated rendering.

In the third aspect, the embodiment of the application provides an electronic device, which includes a memory for storing one or more programs; a processor, when the above-mentioned one or more programs are executed by the above-mentioned processor, implement the above-mentioned method according to any one of the above-mentioned first aspect.

In the fourth aspect, the embodiment of the application provides a computer-readable storage medium on which a computer program is stored. When the computer program is executed by the processor, the method according to any one of the above-mentioned first aspects is implemented.

Compared with the prior art, the embodiments of the invention have at least the following advantages or beneficial effects:

The embodiment of the invention proposes a method for accelerating rendering of a 3D animation, by reducing the resolution or/and frame rate of the 3D animation to be rendered to obtain a low resolution or/and low frame rate 3D animation; start the corresponding AI function in the renderer with built-in AI super resolution and frame supplement function, start rendering for low resolution or/and low frame rate 3D animation, realize AI super-resolution and AI supplementary frame acceleration on the rendered picture in the process of 3D animation rendering, obtain the 3D animation sequence after accelerated rendering and then complete other post-production, which can minimize the rendering time of conventional 3D animation and solve the problem that a large amount of effort, expense and time are wasted in repeated rendering caused by modification in the existing conventional 3D animation production process.

### DESCRIPTION OF THE DRAWINGS

In order to more clearly illustrate the technical solutions of the embodiments of the invention, the following will briefly introduce the figures used in the embodiments. It should be understood that the following figures only illustrate certain embodiments of the invention, and therefore should not be considered as limiting the scope. For ordinary technical personnel in this field, other related figures can also be obtained based on these figures without creative effort.
Figure 1 is a Flowchart of an Embodiment of a 3D Animation Rendering Acceleration Method of the Invention;
Figure 2 is a Flowchart of another Embodiment of a 3D Animation Rendering Acceleration Method of the Invention;
Figure 3 is a Structural Block Diagram of an Embodiment of a 3D Animation Rendering Acceleration System of the Invention;
Figure 4 is a Structural Block Diagram of an Electronic Device Provided by an Embodiment of the Invention.
Icons: 1. Acquisition module; 2. Resolution and frame reduction module; 3. Accelerated rendering module; 4. Processor; 5. Memory; 6. Data bus.

### MODE OF CARRYING OUT THE INVENTION

In order to make the purpose, technical solutions and advantages of the embodiments of the application clearer, the technical solutions in the embodiments of the application will be clearly and completely described below in conjunction with the figures in the embodiments of the application. Apparently, the described embodiments are some of the embodiments of the application, but not all of them. The components of the embodiments of the application generally described and illustrated in the figures herein may be arranged and designed in a variety of different configurations.

### EMBODIMENT

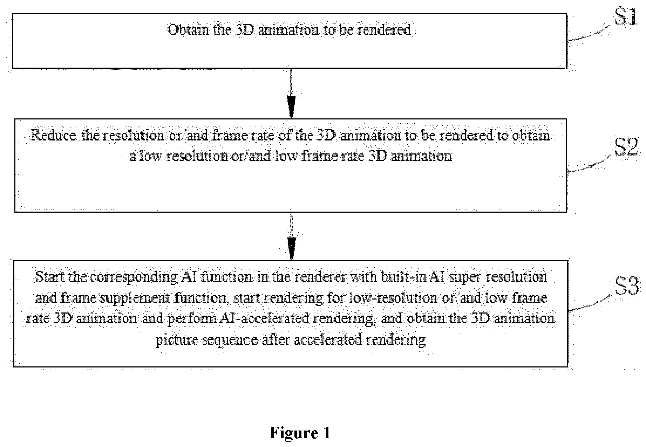

Please refer to Figure 1. The embodiment of the application provides a method for accelerating rendering of 3D animation. As shown in Figure 1, the method for accelerating rendering of 3D animation includes the following steps:

Step S 101: obtain a 3D animation to be rendered.

In the above-mentioned steps, the 3D animation to be rendered can be obtained by making storyboard and animatics of the 3D animation according to user requirements, wherein the storyboard production can be designed according to the user's animation script. Animated images frame by frame are created by using 3D animation design software; then, the obtained animated images are organized into the time axis according to the scenes to create dynamic animations.

Step S102: reduce the resolution or/and frame rate of the 3D animation to be rendered to obtain a low resolution or/and low frame rate 3D animation.

In the above steps, the resolution or/and frame rate of the 3D animation to be rendered is reduced to obtain a low resolution or/and low frame rate 3D animation. Specifically, the 3D animation to be rendered can be dynamically adjusted and set through the built-in renderer of 3D software such as 3Dmax, Maya, C4D, Blender, etc., or a third-party renderer, to initially obtain a 3D animation that meets the needs. Of course, the AI super-resolution function module and the AI frame supplement function module can also be presented in the renderer that comes with 3D software such as 3Dmax, Maya, C4D, Blender or a third-party renderer to perform AI-assisted rendering of 3D animation, which improves rendering efficiency.

Step S103: start the corresponding AI function in the renderer with built-in AI super-resolution and frame supplement functions, start rendering for low-resolution or/and low frame rate 3D animation and perform AI-accelerated rendering, and obtain the sequence of 3D animation pictures after accelerated rendering.

In the above steps, the AI super-resolution function uses deep learning technology. Through the process of feature extraction, feature dimension transformation, nonlinear link, mapping, deconvolution and amplification, etc., and processed by neural network, it allows the video to obtain the same level of image quality as the resolution while increasing the resolution and allows the video to obtain the same level of image quality as the resolution while increasing the resolution. The AI frame supplement function uses the artificial intelligence algorithm to generate the intermediate frame rate mainly based on the calculation of the front and rear frames, and can also infinitely divide the intermediate frame to realize any custom frame number

Further, in some embodiments of the invention, the specific steps of reducing the resolution and frame rate of the 3D animation to be rendered include: in the dynamic animation rendering settings, reduce the resolution of the exported sequence frame to obtain a low-resolution 3D animation; in the dynamic animation rendering settings, reduce the frame rate of the exported sequence frames to obtain low frame rate 3D animation.

Exemplarily, according to actual needs, in the dynamic animation rendering setting, the resolution and frame rate of the imported sequence frames are reduced to 50% or lower of the target resolution and frame rate.

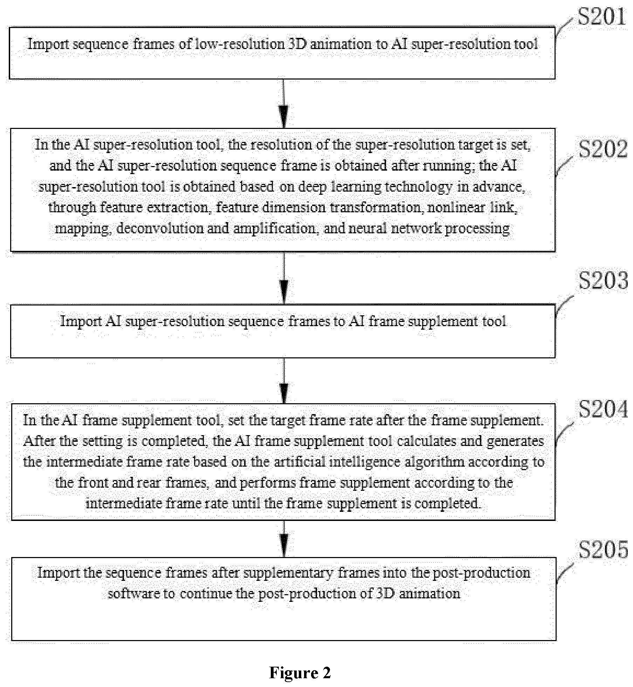

Please refer to Figure 2, in some embodiments of the invention, the steps of starting the corresponding AI function in the renderer with built-in AI super-resolution and frame supplement functions, starting rendering of low-resolution or/and low frame rate 3D animation and performing AI-accelerated rendering specifically include:

S201: Import the sequence frames of the low-resolution 3D animation into the AI super-resolution tool;

S202: in the AI super-resolution tool, set the resolution of the super-resolution target, and obtain the AI super-resolution sequence frame after running; the AI super-resolution tool is pre-based on deep learning technology, obtained through feature extraction, feature dimension transformation, nonlinear link, mapping, deconvolution and amplification, and neural network processing;

The AI super-resolution function uses deep learning technology, which can be processed through the process of feature extraction, feature dimension transformation, nonlinear link, mapping, deconvolution and amplification, etc., and processed by neural network, which allows the video to obtain the same level of image quality as the target resolution while increasing the resolution and allows the video to obtain the same level of image quality as the target resolution while increasing the resolution.

S203: Import the AI super-resolution sequence frame into the AI frame supplement tool;

S204: In the AI frame supplement tool, set the target frame rate after supplementary frame. After the setting is completed, the AI frame supplement tool calculates and generates the intermediate frame rate based on the artificial intelligence algorithm according to the front and rear frames, and performs supplementary frame according to the intermediate frame rate until the supplementary frame is completed; S205: importing the sequence frames after frame supplementation is completed into post-production compositing software, and continuing the post-production of 3D animation.

Further, it also includes infinite division of the intermediate frame rate to realize any custom frame number.

Through the above-mentioned AI frame supplement function, the 3D animation can be supplemented to accelerate rendering, and it is calculated at the current common 3D animation frame rate (24 frames/s, 25 frames/s, 30 frames/s, 60 frames/s, etc.). By reducing the rendering frame rate to 12 to 15 frames per second, the rendering time can be shortened by about 50% to 80%, thereby further reducing the rendering time of conventional 3D animation.

It should be noted that, according to the specific needs of users for rendering 3D animation, that is, according to the resolution and frame rate requirements of the original 3D animation. Specifically, the user can realize the AI-accelerated rendering of 3D animation by turning on the AI super-resolution function, the AI frame supplement function 11, or both the AI super-resolution function and the AI frame supplement function in the renderer. It can shorten the rendering time of 3D animation by about 70% to 90% as a whole, thereby reducing the rendering time of conventional 3D animation to the greatest extent and solve the problem that a large amount of effort, expense and time are wasted in repeated rendering caused by modification in the existing conventional 3D animation production process, so as to achieve the purpose of improving rendering efficiency.

The technical content that is not specifically described in the embodiments of the invention can be realized by existing related technologies, which belong to the prior art, and will not be repeated in the embodiments of the invention.

### EMBODIMENT 2

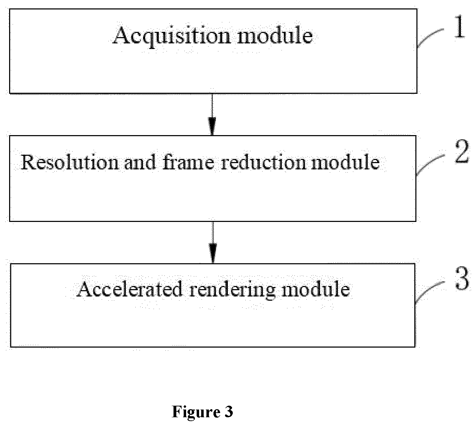

Correspondingly, referring to Figure 3, the embodiment of the application provides a 3D animation rendering acceleration system, which includes:

Acquisition module 1, used to obtain the 3D animation to be rendered; resolution reduction and frame reduction module 2, used to reduce the resolution or/and frame rate of the 3D animation to be rendered to obtain a low resolution or/and low frame rate 3D animation; Accelerated rendering module 3: used to start the corresponding AI function in the renderer with built-in AI super resolution and frame supplement function, start rendering for low-resolution or/and low frame rate 3D animation and perform AI-accelerated rendering, and obtain the 3D animation picture sequence after accelerated rendering

For the specific implementation method, please refer to the above-mentioned method embodiment 1, which will not be elaborated here.

### EMBODIMENT 3

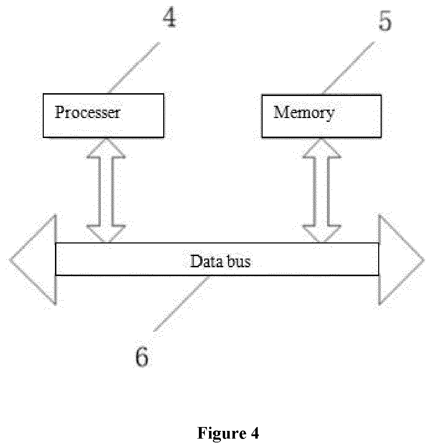

Please refer to Figure 4. The embodiment of the application provides an electronic device. The electronic device comprises at least one processor 4, at least one memory 5 and a data bus 6; wherein: the processor 4 and the memory 5 communicate with each other through the data bus 6; the memory 5 stores program instructions executable by the processor 4, and the processor 4 calls the program instructions to execute a 3D animation rendering acceleration method. For example, it can realize:

Obtain the 3D animation to be rendered; start the AI super-resolution function and/or AI frame supplement function in the renderer to accelerate the rendering of the 3D animation to be rendered, and obtain the 3D animation after accelerated rendering.

Wherein, memory 5 can be but not limited to, Random Access Memory, RAM, Read Only Memory, ROM, Programmable Read-Only Memory, PROM, Erasable Programmable Read-Only Memory, EPROM, Electric Erasable Programmable Read-Only Memory, EEPROM.

The processor 4 may be an integrated circuit chip with signal processing capabilities. The processor 4 can be a processor, including a Central Processing Unit, CPU, Network Processor, NP, etc.; it can also be a Digital Signal Processing, DSP, Application Specific Integrated Circuit, ASIC, Field - Programmable Gate Array, FPGA, or other programmable logic devices, discrete gate or transistor logic devices, discrete hardware components.

It can be understood that the structure shown in Figure 4 is only for illustration. The electronic device may also include more or fewer components than shown in Figure 4, or have a different configuration than that shown in Figure 4. Each component shown in Figure 4 may be implemented by hardware, software or a combination thereof.

### EMBODIMENT 4

The invention provides a computer-readable storage medium, on which a computer program is stored, and when the computer program is executed by the processor 4, a method for accelerating rendering of a three-dimensional animation is realized. For example, it can realize:

Obtain the 3D animation to be rendered; start the AI super-resolution function and/or AI frame supplement function in the renderer to accelerate the rendering of the 3D animation to be rendered, and obtain the 3D animation after accelerated rendering.

In the embodiments provided in this application, it should be understood that the disclosed devices and methods may also be implemented in other ways. The device embodiments described above are only illustrative. For example, the flowcharts and block diagrams in the figures show the architecture, functions and operations of possible implementations of apparatuses, methods and computer program products according to various embodiments of the application. In this regard, each block in the flowchart or block diagram can represent a module, program segment or part of the code. The said module, program segment or part of code contains one or more executable instructions for implementing specified logical functions. It should also be noted that, in some alternative implementations, the functions labeled in the block may occur in a different order than those labeled in the in the figures. For example, two blocks in succession may, in fact, be executed substantially concurrently, or they may sometimes be executed in the reverse order, depending upon the functionality involved. It should also be noted that each block of the block diagrams and/or flowchart illustrations, and combinations of blocks in the block diagrams and/or flowchart illustrations, can be implemented by a dedicated hardware-based system that performs the specified function or action, or may be implemented by a combination of dedicated hardware and computer instructions.

In addition, each functional module in each embodiment of the application may be integrated to form an independent part, each module may exist independently, or two or more modules may be integrated to form an independent part.

It will be obvious to a person skilled in the art that the application is not limited to the details of the exemplary embodiments described above. Also, the application can be implemented in other specific forms without departing from the spirit or essential characteristics of the application. Therefore, no matter from any point of view, the embodiments should be regarded as exemplary and non-restrictive. The scope of the application is defined by the appended claims rather than the above description, and all changes that come within the meaning and range of equivalency of the claims are intended to be embraced therein. Any figure's sign in a claim should not be construed as limiting the claim concerned.

## Claims

1. A method for accelerating rendering of 3D animation, the features of which include:
Obtain the 3D animation to be rendered;
Reduce the resolution or/and frame rate of the 3D animation to be rendered to obtain a low resolution or/and low frame rate 3D animation;
Start the corresponding AI function in the renderer with built-in AI super resolution and frame supplement function, start rendering for low-resolution or/and low frame rate 3D animation and perform AI-accelerated rendering, and obtain the 3D animation picture sequence after accelerated rendering

2. A kind of 3D animation rendering acceleration method as claimed in Claim 1 is **characterized in that** the concrete steps of described reducing the resolution and the frame rate of the 3D animation to be rendered comprises:
In the dynamic animation rendering settings, reduce the resolution of the exported sequence frame to obtain a low-resolution 3D animation;
In the dynamic animation rendering settings, reduce the frame rate of the exported sequence frames to obtain low frame rate 3D animation.

3. A kind of 3D animation rendering acceleration method as claimed in Claim 2 is **characterized in that** the steps of starting the corresponding AI function in the renderer with built-in AI super-resolution and frame supplement functions, starting rendering of low-resolution or/and low frame rate 3D animation and performing AI-accelerated rendering specifically include:
Import the sequence frames of low-resolution 3D animation to the AI super-resolution tool;
In the AI super-resolution tool, set the resolution of the super-resolution target, and get the AI super-resolution sequence frame after running; the AI super-resolution tool is obtained based on deep learning technology in advance through feature extraction, feature dimension transformation, nonlinear link, mapping, deconvolution and amplification, and neural network processing;
Import AI super-resolution sequence frames to AI frame supplement tool;
In the AI frame supplement tool, set the target frame rate after supplementary frame. After the setting is complete, the AI frame supplement tool calculates the intermediate frame rate based on the artificial intelligence algorithm according to the front and rear frames. Carry out supplementary frame according to the intermediate frame rate until the supplementary frame is completed;
Import the sequence frames after supplementary frames into the post-production software to continue the post-production of 3D animation.

4. A kind of 3D animation rendering acceleration method as claimed in Claim 3 is **characterized in that** it can also infinitely divide the intermediate frame rate to realize any custom frame number.

5. The three-dimensional animation rendering acceleration system, **characterized in that**, comprises:
Acquisition module, used to acquire the 3D animation to be rendered;
Resolution reduction and frame reduction module, used to reduce the resolution or/and frame rate of the 3D animation to be rendered to obtain a low resolution or/and low frame rate 3D animation;
Accelerated rendering module: used to start the corresponding AI function in the renderer with built-in AI super resolution and frame supplement function, start rendering for low-resolution or/and low frame rate 3D animation and perform AI-accelerated rendering, and obtain the 3D animation picture sequence after accelerated rendering

6. An electronic device, **characterized in that**, comprises at least one processor, at least one memory and a data bus; wherein: the processor and the memory complete mutual communication through the data bus; the memory stores program instructions executed by the processor, and the processor invokes the program instructions to execute the method according to claims 1.

7. A computer-readable storage medium, on which a computer program is stored, is **characterized in that**, when the computer program is executed by a processor, the method according to claims 1 is implemented.
